Europäisches Patentamt

European Patent Office

Office européen des brevets

(11) Publication number: **0 349 492**
A2

# EUROPEAN PATENT APPLICATION

(21) Application number: **89830088.4**

(22) Date of filing: **28.02.89**

(51) Int. Cl.⁵: **B 23 P 19/04**
B 65 C 3/02, G 09 F 3/00

(30) Priority: **29.06.88 IT 2115288**

(43) Date of publication of application:
**03.01.90 Bulletin 90/01**

(84) Designated Contracting States: **CH DE ES FR LI**

(71) Applicant: **SIGIL METAL PLASTIC di LAZZARI ERINA**
**Via Grassi 2**
**I-21051 Brenno Useria (Varese) (IT)**

(72) Inventor: **Fant, Mario**
**Via Fornaci 13**
**Brenno Useria (Varese) (IT)**

(74) Representative: **Righetti, Giuseppe**
**Bugnion S.p.A. Via Carlo Farini, 81**
**I-20159 Milano (IT)**

(54) Apparatus to make label-carrying seals and the like.

(57) The apparatus comprises a pulling unit (17) which, through a grasping member (18) picks a string (3) up, pulls it and lays it on a housing (32) where a cup (4) is inserted by means of a cup-feeding unit (31). A turnover unit (41) through a second grasping member (45) gets hold of the string (3) and turn it over around a support pin (50) putting the free end (3a) thereof inside the cup, into which cup a closure disk (5) is then introduced through a disk-feeding unit (54). Afterwards a seam folding group (59) folds the upper edge of the cup over the circumferential edge of the disk. Simultaneously, a hole cutting group (65) produces an access opening in a boss offered by the cup. Then a ferrule-feeding unit (37) locates a ferrule (11) under the work length of the string (3), on the opposite side with respect to the first end (3a) thereof, and the ferrule is fastened to the string (3) by a folding and cutting group (70) also carrying out the final cutting off of the string itself.

FIG1

# Description

## Apparatus to make label-carrying seals and the like

The present invention relates to an apparatus to make label-carrying seals and the like, each of said seals being of the type comprising a string fixedly engaged between a holding cup and a closure disk made integral to the cup by steam folding the upper edge of the cup along the circumferential edge of the disk, said string being provided, at one free end thereof, with a ferrule to be undetachably engaged into a slotted seat formed in a boss offered by said cup.

In greater detail, the apparatus of the invention is adapted to produce conventional seals in a completely automatic manner, which seals are designed to be associated with particular products, garments for example, being combined with information and/or advertising labels.

It is known that during the packaging processes involving some products such as garments and the like, the user of particular seals is provided which, when they are applied to the corresponding article, can receive one or more information and/or advertising labels in engagement. Said seals are made in such a manner that the removal of the labels from the product is not allowed unless the seal is broken.

To this end, one kind of seal, to which the present invention particularly refers, is substantially comprised of a string engaged between a holding cup and a closure disk made integral to each other by seam folding the upper edge of the cup along the circumferential edge of the disk. In greater detail, the string passes between the cup and the disk in a central area of the longitudinal extension thereof and one end of the string is engaged between the cup and the disk so that the extension of the string forms an eyelet close to which the seal is tied up to the corresponding article.

Fastened to the free end of the string opposite the eyelet is a metal ferrule adapted to be engaged into a slotted seat formed within a boss offered by the cup. The ferrule is provided with an elastic tongue designed to enter the slotted seat so that the ferrule cannot be removed again from the cup once it has been applied thereto.

Methods hitherto used to manufacture seals of the above described type need a number of man-power, which involves high production costs.

In fact according to one of said methods the string, already cut to size and provided with the ferrule during a previous working step, must be folded back manually in order to obtain said eyelet and then introduced into the cup which is still a semi-finished product. Actually the cup has been formed in a previous cutting and drawing step from a sheet metal. Then a disk made of thin paperboard or other material is inserted into the cup, still manually, by an operator. Afterwards, the workpiece is submitted to the action of a manually-operated press which, through a punch, seams the upper cup edge on the circumferential edge of the paperboard thus causing a mutual stable union therebetween.

While this operation is taking place, the cup which is seated in an appropriate housing is also submitted to a hole cutting action in the region of a boss provided thereon. This hole cutting action, carried out by an auxiliary punch, aims to produce an opening in the boss allowing access to the slotted seat, through which opening the ferrule will be inserted when the seal is being set up.

In order to reduce and simplify as much as possible the manual operations involved in the above described production methods, apparatuses have been recently devised which, during each work cycle, using a rotary table on which cups are distributed through vibrating feeders and the like, are capable of feeding a single cup to the operating station where seals are made. In greater detail, when a cup, disposed in a corresponding housing formed in the rotary table, reaches the work station, the operator must manually insert the suitably folded back string into the cup, then cause the descent of a punch which, by a single operation, carries out the insertion of the closure disk and the seam folding of the upper cup edge on the disk. In fact, provision is made for feeding means which in each working cycle dispose a disk under the punch causing it to adhere to the punch itself by effect of the vacuum created by a suction device opening in the lower part of the latter. Simultaneously with the application of the disk and execution of the seam folding, a hole is also provided in the boss, in the same manner as described with reference to the preceding method.

As is apparent from the foregoing, with the use of these apparatuses as well, manual operations are necessary in order to engage the string inside the cup. As previously said, for the above reason there is an increase in the production cost and in addition the production does not always give satisfactory results.

It is also to be pointed out that with the manual introduction of the string into the cup it often happens that the end of the bent string portion projects from the cup instead of terminating inside it, so as to be hidden by the closure disk. So it is necessary to manually carry out the cutting of the string end projecting from the cups, above all if seals are intended for high quality products and, as a result, production costs are further increased and the production rate becomes lower. In addition there is in this case a useless waste of string and the present incidence of this material on the seal cost is rather important taking into account the fact that a seal has a low price.

A further drawback is given by the fact that it is necessary to carry out the cutting to size of the string and the application of the ferrule thereon during a working step completely separated from the one concerning the accomplishment of the real seal.

It is an object of the present invention to solve all the drawbacks of the known art by providing an apparatus capable of producing the above described seals in a completely automatic manner.

The foregoing and further objects, which will become more apparent in the course of the following description are substantially attained by an apparatus to make label-carrying seals and the like, characterized in that it comprises the combination of: a support base; a pulling unit disposed over the base and acting, by at least a first movable grasping member, on the string arranged in the form of a continuous coil, clutching one end thereof and pulling it along a predetermined length; retaining means acting on the string to hold it spaced apart from said first end at the end of the action of the pulling unit, a work portion or length of the string being defined between said retaining means and the first end of the string itself; a cup-feeding unit acting on the base so as to dispose one cup at each work cycle inside a housing located under the string in an intermediate region of the work portion thereof; a turnover unit arranged so as to engage the string close to the first end thereof and turn it over around a support pin introducing said first end into the holding cup, so that the string length comprised between said first end and the holding cup may form an eyelet; a disk-feeding unit disposed over the base and acting so as to place one disk at each work cycle inside the cup located under the string; a seam folding group acting on the base so as to push the disk into the cup and seam the upper edge of the latter around the circumferential edge of the disk; a hole cutting group acting on the base in cooperation with the seam folding group to produce an opening in the cup boss allowing access to said slotted seat, a ferrule-feeding unit acting on the base so as to locate a ferrule at each work cycle under the string close to said retaining means; a folding and cutting group disposed over the base and acting on the ferrule to secure it to the string and cut the latter close to the ferrule; and ejector means to remove the finished product from the base.

Further features and advantages will best be understood from the detailed description of a preferred embodiment of an apparatus to produce label-carrying seals and the like in accordance with the present invention, given hereinafter by way of non limiting example with reference to the accompanying drawings, in which:

- Fig. 1 is a partially broken perspective view of the apparatus of the invention;

- Fig. 2 is a broken perspective view to an enlarged scale of a detail of the apparatus shown in Fig. 1;

- Fig. 3 is a perspective view of a label-carrying seal made with the apparatus of the invention;

- Fig. 4 is a perspective top view of a cup used to make the seal shown in Fig. 3, before being submitted to the seaming of its upper edge;

- Fig. 5 is a perspective view of the cup shown in Fig. 4 in an upturned position, showing the access opening formed on the boss;

- Fig. 6 is a perspective view of a closure disk used to make the seal shown in Fig. 3;

- Fig. 7 is a perspective view showing a number of mutually connected ferrules before being applied to the seal string.

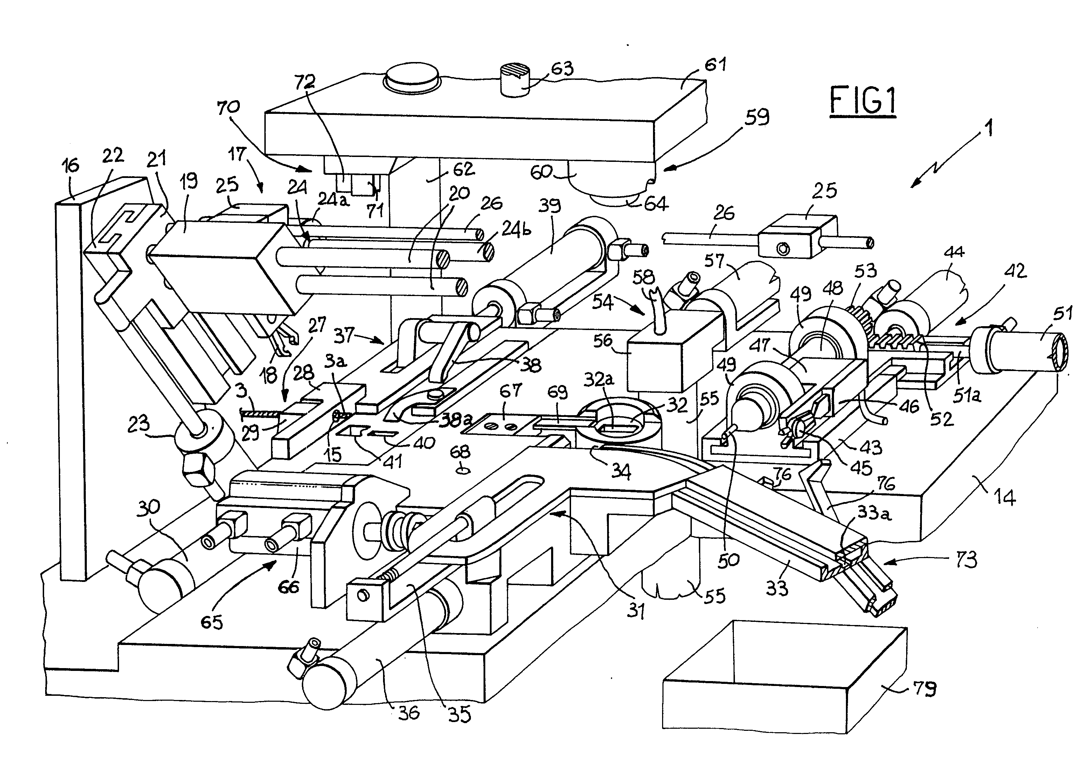

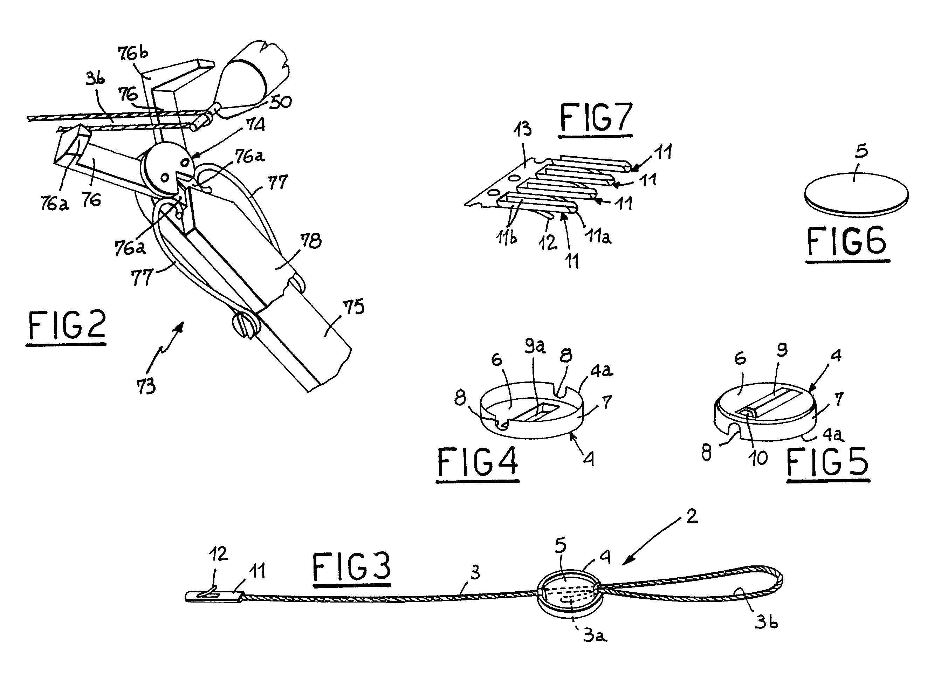

Referring to the drawings and in particular to Fig. 1, reference numeral 1 generally denotes an apparatus to make label-carrying seals and the like in accordance with the present invention. Apparatus 1 is designed to make seals of the type identified by 2 in Fig. 3. As shown in said figure, seal 2 substantially comprises a string 3 fixedly engaged, in an intermediate region of the longitudinal extension thereof, between a cup 4 and a closure disk 5.

As clearly shown in Fig. 4, the cup 4 which is formed from a sheet metal during a preceding cutting and drawing step, has a bottom 6 of circular shape around which a side wall 7 extends, the latter being provided with two diametrically opposed recesses 8 adapted to be passed through by the string 3. Formed on the bottom 6 is a boss 9 (Fig. 5) defining a slotted seat 9a accessible through an opening 10 offered by the boss itself and shown, by way of example, in Fig. 5.

Still in known manner, the closure disk 5 consists of a substantially round paperboard piece which is introduced into the cup 4 after the string 3 has been inserted therein and afterwards fastened to said cup through the seam folding of an upper edge 4a offered by the side wall 7 of the cup itself.

The string 3 is bent so as to have one end 32 fixedly engaged between the cup 4 and the disk 5, thereby forming en eyelet 3b. The other end of the string opposite the eyelet is free and a metal ferrule 11 is fastened thereto and it is designed to be introduced into the slotted seat 9a while the seal 2 is being set up. The metal ferrule 11 is provided with an elastic tongue 12 which being fitted into the slotted seat 9a in known manner, prevents it from being disengaged from the cup 4, once it has been secured thereto.

As shown in Fig. 7, ferrule 11 substantially comprises a base wall 11a in which the tongue 12 is formed and from which two side walls 11b extend. When the ferrule has not yet been engaged with the string 3, said side walls are oriented in a substantially parallel direction. In addition, before being combined with the seal 2, said ferrule 11 is consecutively connected to other ferrules by means of a connecting plate 13 to be cut away during the application of the ferrule itself.

Turning back to Fig. 1, apparatus 1 comprises a base 14 partially shown, designed to receive the first end 3a of the string 3 which is wound up to form a continuous coil not shown as known per se. String 3 reaches the base 14 passing through a guide hole 15 formed in a piece integral to the base.

Laterally standing up from the base 14 are two posts 16 (only one of which is shown in Fig. 1) supporting a pulling unit globally identified by 17. The pulling unit has the function of picking up the first end 3a of the string 3 pulling it apart a predetermined length from the guide hole 15. To this end, the pulling unit 17 substantially comprises a first grasping member 18, known per se and conventional, supported by a carriage 19 movable along guide bars 20 the opposite ends of which are integral to sliding blocks 21 (only one of which is shown in Fig. 1). The sliding blocks 21 are slidably engaged along respective guide columns 22 each of them being integral to one of the posts 16. In addition the sliding blocks 21 are driven by respective fluid-actuated cylinders 23 designed to cause the displacement of the pulling unit 17 from a rest position in which, as shown in the drawing, it is raised and spaced away from the base 14 to a working position in which the grasping member 18 can pick the string 3 up and pull it along upon the displacement action of the carriage 19.

The displacements of carriage 19 are controlled by an actuator 24 the operation of which in the example shown is based on an electromagnetic induction principle. In greater detail, in known manner, the actuator 24 comprises a solenoid 24a fastened to the carriage 19 and slidably engaged along a bar 24b fixedly secured at either and thereof to the sliding blocks 21.

After the pulling unit 17 has reached the working position and the grasping member 18 has picked up the first end 3a of the string 3, the solenoid 24a being energized by a predetermined direct current flux causes the displacement thereof along the bar 24b, which brings about the displacement of the carriage 19 along the guide bars 20. The string 3 being held by the grasping member 18 is pulled along a predetermined length the amount of which has previously been established by the positioning of two limits 25 along a support bar 26 integral to the sliding blocks 21 and extending parallelly to the guide bars 20. At the end of the pulling action of string 3 there is the actuation of retaining means 27 acting on the string itself to hold it, at its side opposite the first end 3a, during the whole work cycle. The retaining means 27 preferably comprises a locator 28 fastened to the base 14 and disposed alongside the string 3 as well as a jaw 29 disposed on the side of the string 3 opposite that facing the locator 28. The jaw 29 is movable upon the action of a fluid-actuated cylinder 30 to cause the string 3 to be clamped against the locator 28.

Defined between the retaining means 27 and the first end 3a of the string 3 pulled away from said retaining means is a work string length on which all necessary operations to make a seal 2 will be carried out.

The apparatus 1 also comprises a cup-feeding unit globally identified by 31 acting on the base 14 so as to arrange a cup 4 (Fig. 4) at each work cycle in a housing 32 matching the shape of the cup itself and located under the string 3 in an intermediate region of the work length of the same. To this end the cup-feeding unit 31 comprises a feed guide 33 designed to slidably engage a number of cups disposed according to a predetermined orientation.

Cups 4 are sent to the feed guide 33 through vibrating feeders or the like, not shown as known per se. Preferably, the predetermined orientation of the cups in the feed guide 33 is maintained by the engagement of the boss 9 offered by each cup, in a groove 33a provided in the feed guide.

The feed guide 33 terminates in an outlet end 34 disposed before the housing 32 and close to which a pusher 35 operates. The pusher 35, which is only partly shown in Fig. 1, reciprocates in the direction of the housing being controlled by a respective fluid-actuated cylinder 36. When the pusher is moved towards the housing 32 one end of the same not shown in the drawing is brought in contact with a cup coming out of the outlet end 34 of the feed guide 33. Thus the cup is pushed into the housing 32 and its boss 9 enters a cavity 32a offered by the housing itself. When the pusher 35 moves backwards with respect to the housing 32, a new cup will be free to come out of the guide 33 and take in turn a position allowing its being pushed towards and within the housing in the next work cycle.

After the string 3 has been pulled by the pulling unit 17 and the retaining means 27 has been operated, a ferrule-feeding unit 37 is also actuated. It has the function of disposing a ferrule 11 at each work cycle on the base 14 under the string 3 close to the guide hole 15.

The ferrule-feeding unit 37 comprises a pawl 38 which in known manner is spring urged towards the base 14 and, upon command of a corresponding fluid-actuated cylinder 39, carries out an alternate backward and forward motion on the base itself. The pawl 38 acts on the mutually connected ferrules 11, as shown in fig. 7, to cause one of them to be disposed during each working cycle under the string 3 in such a manner that its tongue 12 is accomodated in a housing 40 formed in the base 14 whereas the plate portion 13 connecting it to the other ferrules 11 will be placed over a discharge opening 41 formed in the base itself close to the guide hole 15. Combined with the pawl 38 is a retaining spring 38a acting on the mutually connected ferrules 11 to hold them during the return stroke of the pawl. Thus the pawl 38 cannot drag along the ferrules 11 when it moves away from the housing 40.

After being carried along by the pulling unit 17 the string 3 is also engaged close to its first end 3a by a turnover unit 42 acting so as to give rise to the formation of an eyelet. In greater detail, the turnover unit 42 is slidably mounted on a guide 43 fastened to the base 14 and is movable upon command of a fluid-actuated cylinder 44 from a rest position in which it is located in a backward position with respect to the string 3 so that it does not hinder the movements of the first grasping member 18 to a working position in which it is close to the string 3 held between the retaining means 27 and the grasping member 18. The turnover unit 41 comprises a second grasping member 45 operated by a respective fluid-operated actuator 46 which picks the string 3 up close to the end 3a thereof held by the first grasping member 18. At this point the grasping member 18 releases the string 3 and the pulling unit 17, upon command of the fluid-actuated cylinders 23, is raised along the guide columns 22 and brought to its rest position to allow the carriage 19 to move backward to its starting position.

As shown in fig. 1, the second grasping member 45 is mounted on an arm 47 integral to a shaft 48 rotatably passing through two support elements 49 in turn slidably engaged in the guide 43. Advantageously, carried by the shaft 48, coaxially on the extension of one of its ends is a support pin 50 which, when the turnover unit 42 is brought to the working position locates over the string 3. When the second grasping member 45 has picked up the string 3, another fluid-actuated cylinder 51 is operated the rod of which 51a is connected to a rack 52 operatively engaging with a pinion gear 53 keyed on the shaft 48 on its side opposite the support pin 50. In greater detail, referring to Fig. 1, che cylinder 51 is operated in order to withdraw the rod 51a so that, by effect of the rotation imparted to the shaft 48, the grasping member 45 carries out an angular rotation about the pin 50 axis, preferably through an angle of 180°. As a result of the angular rotation of the grasping member 45, the string 3 is folded back around the pin 50 so that the first end 3a of the same is disposed just upon the cup 4 located in the housing 32.

Then a disk-feeding unit 54 acting over the base 14 is operated and it places a disk 5 at each work cycle into the cup 4 located under the string 3. The disk-feeding unit 54 is comprised of a tubular guide 55 extending upright close to the cup housing 32. The tubular guide 55 slidably engages a number of mutually stacked disks 5 which are pushed upwardly by counterweight devices, spring means or other known means acting on the lowermost disk. The disk-feeding unit 54 also comprises a grasping block 56 provided at the lower part thereof with a housing (not shown) adapted to accommodate a disk 5. The grasping block 56 is movable upon command of a respective fluid-actuated cylinder 57, from a grasping position in which, as shown in Fig. 1, it is placed over the tubular guide 55 to receive one of the disks 5 in engagement to a deposit position in which it is located over the housing 32 to lay down the disk into the cup 4.

Advantageously, associated with the grasping block 56 is an air duct 58, partially shown, opening in the lower part of the block where the disks 5 are engaged. In known manner and by known means the vacuum is created along the air duct 58 so that the disk may adhere to the block 56 when the latter moves from its grasping position to its deposit position. Then a pneumatic thrust is applied to cause the introduction of the disk 5 into the cup 4 when the grasping block 56 has reached the deposit position.

After the disk 5 has been laid down into the cup 4 the block 56 is returned to its grasping position.

Afterwards a seam folding group is driven to move over the base 14. It has the function of pushing the disk 5 inside the cup 4 and simultaneously seaming the upper edge 4a of the latter around the circumferential edge of the disk.

Preferably the seaming group 59 comprises a seaming collar 60 fastened underneath a thrusting plate 61 slidably guided in a vertical direction along at least a column 62 and movable upon the action of a fluid-operated actuator, only the rod of which is partially shown and identified by 63. Slidably engaged within the seaming collar 60 is a thrust punch 64 movable towards the thrusting plate 61 against the action of a compression spring not shown disposed intermediate the punch and the plate. On the operation of the seaming group 59 the thrusting plate 61 is lowered towards the base 14, upon the action of said actuator. As a result, first the punch 64 contacts the disk 5. Then, the lowering action of the plate 61 going on, the disk 5 is forcedly urged into the cup 4, the strength amount being determined by the preloading of the spring acting on the punch 64. Simultaneously, in known manner, the seaming collar 60 comes in contact with the upper edge 4a of the cup 4 thereby causing the seaming thereof around the circumferential edge of the disk 5.

While this operation is being carried out a hole cutting group 65 is driven. It acts on the base 14 in cooperation with the seaming group 59 to cut said access opening 10 in the cup boss 9.

Said hole cutting group 65 is comprised of a fluid-actuated cylinder 66 which, while the cup is pushed and forcedly held in the housing 32 by effect of the punch action on the disk, causes the operation of a rocker lever 67 pivoted on the base 14 through a pivot 68. The rocker lever 67 on its side opposite that facing the cylinder 66, carries a hole cutting punch 69 which, when the lever is operated, is urged into the housing 32 along the cavity 32a thus cutting the access opening in the boss 9.

Simultaneously with the operation of the seaming group 59, a folding and cutting group 70 is operated as well. It is located over the base 14 and acts on the ferrule 11 disposed under the string 3 to fasten it to the latter and cut the string together with the portion of plate 13 connecting said ferrule to the other ferrules 11 aligned therewith.

To this end the folding and cutting group 70 is advantageously fastened to the lower part of the thrusting plate 61 supporting the seaming group 59. In known manner the folding and cutting group 70 comprises a folding punch 71 spring connected to the plate 61 in the same manner as described with reference to the thrust punch 64 and a cutting punch 72 matching the shape of the discharge opening 41 formed in the base 14.

When the thrusting plate 61 is lowered towards the base 14 first the folding punch 71 contacts the side walls 11b of the ferrule 11 then, the plate lowering going on, the side walls 11b are folded down on the string 3 due to the thrust action of the folding punch 71, the amount of said thrust being the result of the preloading of a spring located intermediate the punch and the plate.

At the same time the cutting punch 72, fixedly fastened to the plate 61, is urged into the discharge opening 41 causing the string 3 and the plate 13 to be cut.

Finally provision is made for ejector means 73 to remove the finished product from the base 14. Referring particularly to Fig. 2, the ejector means 73 comprises a grasping member 74 mounted on a bar 75 connected to the rod of a fluid-actuated cylinder not shown. Upon the action of said cylinder, the grasping member 74 is brought from a rest position in which, as shown in Fig. 1, it is spaced apart from the string 3 to an operating position in which, as shown in Fig. 2, it acts on the eyelet 3b which is held taut between the support pin 50 and the cup 4 located in the housing 32.

As clearly shown in Fig. 2, the grasping member 74 is provided with two movable elements 76 fitted on the bar 75 and susceptible of being moved close to each other, against the action of return springs 77 and upon the action of a wedge 78 driven by a corresponding fluid-actuated cylinder not shown acting on the ends 76a of said movable elements. In greater detail, the wedge 78 is pushed towards the grasping member 74 so as to cause the mutual spreading apart of the ends 76a and, as a result, the approaching of the grasping portions 76b of the movable elements 76.

The same construction and operation principles as described with reference to the grasping member 74 can be used as well for the first and second grasping members 18 and 45. When the movable elements 76 have closed on the string 3, the second grasping member 45 releases the string and the turnover unit 42 is brought back to the rest portion, the grasping member being disposed as shown in Fig. 1.

Then, after the thrusting plate 61 and hole cutting punch 69 have been brought back to the respective original positions, the grasping member 74 upon command of the bar 65 is brought to its rest position and it drops the seal thus obtained into a reception tray 79.

The present invention attains the proposed aims.

The apparatus is in fact adapted to eliminate all manual operations necessary in the known art to make seals of the described type. In addition by the apparatus of the invention it is possible to simultaneously carry out, together with the assembling of the seal, the fastening of the ferrule 11 to the string 3 and the cutting to size of the string, which operations in the known art were performed during a step completely separated from the real accomplishment of the seal. As a result, man-power costs are remarkably reduced and the production is greatly increased. In this connection it is to be pointed out that, due to the high degree of automation thus reached, a single operator can be entrusted with the control of a number of apparatuses of the type in question, each of them being capable of producing seals reaching a much higher production than with the traditional methods.

Obviously many modifications and variations can be made to the present invention all falling within the scope of the inventive idea characterizing it.

## Claims

1. An apparatus to make label-carrying seals and the like, each of said seals (2) being of the type comprising a string (3) fixedly engaged between a holding (4) cup and a closure disk (5) made integral to the cup by seam folding the upper edge (4a) of the cup along the circumferential edge of the disk, said string (3) being provided, at one free end thereof, with a ferrule (11) to be undetachably engaged into a slotted seat (9a) formed in a boss (9) offered by said cup (4), characterized in that it comprises the combination of:
- a support base (14);
- a pulling unit (17) disposed over the base and acting, by at least a first movable grasping member (18), on the string (3) arranged in the form of a continuous coil, clutching one end (3a) thereof and pulling it along a predetermined length;
- retaining means (27) acting on the string (3) to hold is spaced apart from said first end at the end of the action of the pulling unit (17), a work portion or length of the string being defined between said retaining means and the first end of the string itself;
- a cup-feeding unit (31) acting on the base (14) so as to dispose one cup (4) at each work cycle inside a housing (32) located under the string (3) in an intermediate region of the work portion thereof;
- a turnover unit (42) arranged so as to engage the string (3) close to the first end (3a) thereof and turn it over around a support pin (50) introducing said first end into the holding cup (4), so that the string length comprised between said first end (3a) and the holding cup may form an eyelet;
- a disk-feeding unit (54) disposed over the base (14) and acting so as to place one disk (5) at each work cycle inside the cup (4) located under the string (3);
- a seam folding group (59) acting on the base (14) so as to push the disk (5) into the cup (4) and seam the upper edge (4a) of the latter around the circumferential edge of the disk;
- a hole cutting group (65) acting on the base (14) in cooperation with the seam folding group (59) to produce an opening (10) in the cup boss (9) allowing access to said slotted seat (9a);
- a ferrule-feeding unit (37) acting on the base (14) so as to locate a ferrule (11) at each work cycle under the string (3) close to said retaining means (27);
- a folding and cutting group (70) disposed over the base (14) and acting on the ferrule (11) to secure it to the string (3) and cut the latter close to the ferrule; and
- ejector means (73) to remove the finished product from the base (14).

2. An apparatus as claimed in claim 1, characterized in that said pulling unit (17) comprises a carriage (14) carrying said grasping member (18) and movable, upon command of an actuator (24), along guide bars (20) which are fixedly supported by sliding blocks (21) movable along guide columns (22) to bring the pulling unit (17) from a rest position in which it is spaced apart from the base (14) to an operating position in which it is disposed close to the base to allow the string (3) to be picked up by the grasping member (18) and then pulled along by effect of the displacement of the carriage (19).

3. An apparatus as claimed in claim 1, characterized in that said retaining means (27) comprises a locator (28) fastened to the base (14) and disposed alongside the string (3), and a jaw (29) placed alongside the string on the opposite side with respect to the locator (28) and movable towards the latter upon command of a fluid-actuated cylinder (20) to clamp the string (3).

4. An apparatus as claimed in claim 1, characterized in that said cup-feeding unit (31) comprises a feed guide (33) arranged so as to slidably engage a number of cups (4) disposed according to a predetermined orientation and a pusher (35) movable upon command of a fluid-actuated cylinder (36) and acting close to an outlet end (34) of the feed guide (33) to urge a cup (4) into said housing at each work cycle.

5. An apparatus as claimed in claim 1, characterized in that said turnover unit (42) comprises a second grasping member (45) mounted on an arm (47) rotatably movable about the axis of said support pin (50), said turnover unit (42) being movable along a guide (43) secured to the base (14), from a rest position in which it is spaced apart from the string (3) to an operating position in which it is disposed close to the string to allow said second grasping member (45) to pick the string up.

6. An apparatus as claimed in claim 5, characterized in that said arm (47) is integral to a shaft (48) carrying said support pin (50) and rotatably connected to at least a support element (49) slidably engaged along said guide (43), a pinion gear (53) being keyed on said shaft (48), which pinion is operatively engaged by a rack (52) operated by a fluid-actuated cylinder (51) to cause the angular rotation of the arm (47).

7. An apparatus as claimed in claim 1, characterized in that said ferrule-feeding unit (37) comprises a pawl (38) spring urged towards the base (14), reciprocating thereon and acting on a number of consecutively connected ferrules (11) to cause one of them to be disposed at each work cycle under the string (3) and to be applied thereto, and then separated from the other ferrules (11) upon the action of a folding and cutting group (70), a retaining spring (38a) being associated with said pawl (38), which spring acts on the mutually connected ferrules (11) to hold them during the return stroke of said pawl.

8. An apparatus as claimed in claim 1, characterized in that said disk-feeding unit (54) comprises an upright tubular guide (55) slidably engaging a number of mutually superposed disks (5) which are pushed upwardly along the tubular guide itself and a grasping block (56) reciprocating from a rest position in which it is disposed on the tubular guide (55) to receive one of said disks (5) in engagement and a deposit position in which it is disposed above said housing (32) to lay down the disk (5) into the cup (4), an air duct (58) being associated with said grasping block (56) and opening in the lower part of the block itself, the vacuum being produced along said duct so as to make the disk (5) adhere against the grasping block (56) when the latter moves from the grasping position to the deposit position, a pneumatic thrust being then applied to push the disk (5) into the cup (4) when the block (56) reaches the deposit position.

9. An apparatus as claimed in claim 1, characterized in that said hole cutting group (65) comprises a hole cutting punch (69) movable in said housing (32) upon the operation of a rocker lever (67) pivoted on the base (14) and operated by a fluid-actuated cylinder (66).

10. An apparatus as claimed in claim 1, characterized in that said seam folding group (59) and said folding and cutting group (70) are mounted under a thrusting plate (61) movable towards the base (14) to simultaneously cause the seam folding group (59) to act on the cup (4) and the folding and cutting group (70) to act on the ferrule (11) and the string (3).

11. An apparatus as claimed in claim 1, characterized in that said ejector means (73) comprises a grasping member (74) mounted on a movable support bar (75) designed to bring the grasping member from a rest position in which it is disposed in a lower position with respect to the string (3) to an operating position in which it acts on the string (3) clutching it between two movable elements (76a, 76b) and dropping the obtained seal (2) into a reception tray (79) as a result of the grasping member coming back to its rest position.

FIG1

FIG2

FIG3

FIG4

FIG5

FIG6

FIG7